# EUROPEAN PATENT APPLICATION

(11) **EP 4 016 286 A1**
(43) Date of publication of application: **22.06.2022**
(21) Application number: 21211025.8
(22) Date of filing: 29.11.2021
(51) Int. Cl.: G06F 8/65, G05B 19/418

(54) **UPDATING INDEPENDENT COMPUTING DEVICES IN INDUSTRIAL ENVIRONMENTS**

(30) Priority: 18.12.2020 EP 20215614
(71) Applicant: Tetra Laval Holdings & Finance S.A., 1009 Pully (CH)
(72) Inventor: Hjortberg, Anders, 244 65 Furulund (SE); Pannu, Pukashawar, 230 53 Alnarp (SE)
(74) Representative: Tetra Pak - Patent Attorneys SE

(57) **Abstract**

Methods and apparatus, including computer program products, for updating a plurality of independent computing devices (114, 116, 118, 122, 124, 128) distributed in multiple geographical locations. The independent computing devices (114, 116, 118, 122, 124, 128) are registered with a central server (106). A device type is associated with two or more of the registered computing devices (114, 116, 118, 122, 124, 128). An approved software update is determined for the device type, which approved software update is to be distributed to the two or more computing devices (114, 116, 118, 122, 124, 128) associated with the device type. The approved software update is asynchronously distributed to the two or more computing devices (114, 116, 118, 122, 124, 128) associated with the device type, in accordance with distribution settings for the two or more computing devices (114, 116, 118, 122, 124, 128).

## Description

### BACKGROUND

The present invention relates to performing computer software updates, and more specifically to distributing and performing computer software updates on independent computers located in various industrial settings.

Computerized systems are an integral part of most modern industrial environments. This is particularly true for the food processing and packaging industry. The use of computerized system technology is expected to continue to grow in the food industry as the cost of components decrease, as components are continually improved to withstand the rigors of the food processing environment, and as food companies continue to update production facilities, equipment and manufacturing processes in an attempt to produce high quality, high value products. New process design strives to achieve safe quality products, while at the same time reducing production time and cost. The use of computerized control systems in the production and packaging of food products lends itself to fulfilling those goals.

As a consequence of this development, it is important that the software of the computers in these systems is kept up to date, not only for efficiency and functionality reasons, but also for safety reasons, such that reliability and safety can be maintained throughout the entire food production and packaging processes. However, computers in industrial environments, and in particular within food processing and packaging plants are typically managed independently, mainly for business reasons. For example, if Manufacturer A in Plant A uses computer equipment and software from a particular provider and a competitor Manufacturer B in Plant B uses the same type of computer equipment and software from the same provider, they may not want their computer equipment to be part of the same domain, which is currently a requirement in order for the provider to be able to distribute software updates to both Manufacturer A and Manufacturer B. Instead the provider must manage Manufacturer A's equipment separately from Manufacturer B's equipment, which is very inefficient with regards to distributing identical software updates to both Manufacturer A and Manufacturer B. Thus, there is a need for better techniques for updating independent computing devices in industrial environments in an efficient, reliable and secure manner.

### SUMMARY

It is an object of the invention to at least partly overcome one or more of the above-identified limitations of the prior art. In particular, it is an object to provide methods and systems for updating independent computing devices distributed across several production plants.

According to a first aspect, the invention relates to a method for updating a plurality of independent computing devices distributed across a plurality of production plants or in multiple geographical locations. The method includes:
- registering the independent computing devices with a central server;
- associating a device type with two or more of the registered computing devices;
- determining, for the device type, an approved software update to be distributed to the two or more computing devices associated with the device type; and
- asynchronously distributing the approved software update to the two or more computing devices associated with the device type, in accordance with distribution settings for the two or more computing devices.

On a general level, this invention provides for efficient upgrades of computers that need to be upgraded with the same software (at least in part), such as security software patches and/or other types of software updates, but without requiring the computer to be members of the same domain. Independent computing devices are not required to be members of the same domain and can be operating completely off-line. An independent computing device operating off-line can be seen as belonging to its own domain. Registering computing devices and associating them with one or more device types enables distribution of software updates on a device type basis, rather than on an individual computing device basis. This provides significant efficiency benefits in the context of software distribution.

Further, the software updates have been reviewed and approved by the provider of the software updates prior to making them available for distribution. This creates a level of trust, as the owners of the client computing devices can feel confident that the software that is distributed is authorized and should be functioning properly when installed on their computing devices.

The software is distributed asynchronously, that is, the distribution does not occur simultaneously to all computing devices of a given device type. This reduces the load on the server that hosts the software updates, as well as the network traffic to the server, and it also allows the client computing devices to obtain the software at a time when there is the least possibility to disruption of the production and packaging process. The owners of the computing devices may also provide distribution settings, which specify what kind of software updates should be made available for particular devices. This creates significant flexibility for the computing device owners in terms of customizing the updates to fit their particular circumstances. As will be described in further detail below, in some embodiments, so-called Plant Gateways may be provided, which communicate with the server on behalf of several computing devices, and subsequently distributes the updates to the computing devices after the updates have been received from the server.

According to one embodiment, the method further comprises: associating a sub-device type with a computing device among the registered computing devices, wherein the sub-device type has a strictly hierarchical relationship with the device type; and distributing the one or more approved updates to the computing device in accordance with its sub-device type. Sub-device types make it possible for a product owner to distribute different updates to different clients, for example, even though all the clients' computing devices may belong to the same device type.

For example, assume a situation where the software provider distributes software updates to Clients A, B and C. Each of these clients has computing devices that are registered with the software provider under the same device type, say Device Type X. Now, assume that the software provider has an optional software update to distribute to all devices of Device Type X. However, for some reason, Client B is not interested in receiving this software update. In such a scenario, it may be advantageous to create a sub-device type X1 for Client A's and C's computing devices, and another sub-device type X2 for Client B's computing devices, and deploy this software update only to sub-device type X1, rather than to Device Type X. Having this granularity greatly increases the flexibility of the software update distribution. It should be noted that sub-device types have a hierarchical relationship to the device types, so in this particular example, a computing device needs to be registered as Device Type X, before it can be associated with sub-device types X1 or X2, respectively. It should be further noted that in some embodiments, there is no need to define a sub-device type X2, but that Client B's computing devices could simply retain their association with Device Type X.

According to one embodiment, the method further comprises: scheduling the distributed software update to be installed during a window of time when individual plants are closed for maintenance. Having the ability to schedule updates when a plant is closed for maintenance (or any other time when the computing devices are not needed for production / packaging purposes) not only creates flexibility for the device owners, but also establishes a safe production / packaging environment. For example, if a software update accidentally were to be installed on a computer that controls a production line during a time when the production line was active, this might have serious consequences. The flexibility of choosing an installation window of time in accordance with the present invention makes it possible to avoid such scenarios.

According to one embodiment, the computing devices include one or more of: industrial personal computers, virtual machines, production line controllers, and a computing device integrated into a machine forming a part of the production line. A variety of computers, including virtual machines, may be used in a food and beverage production / packaging environment, and it is important to keep all such equipment up to date. The basic principles of the present invention can be applied to a range of different types of computing devices having different operating systems and operating system versions, which creates flexibility and the ability to keep the computing device up to date, irrespective of its type and particular use in the plant.

According to one embodiment, the updates are reviewed and approved by an administrator prior to distributing the updates to the respective computing devices. As was mentioned above, having the software updates curated by an expert at the provider, prior to distributing the software updates to the client devices, enables the owners of the client devices to trust that the updates are both legitimate and necessary. This also saves time, as it removes a lot of the uncertainty among the client device owners as to what updates can be relied upon, and the client device owners do not need to perform any research on their own.

According to one embodiment, the registering further comprises: configuring distribution settings for the computing device. That is, when a computing device is registered and a device type is associated with the computing device, the owner of the computing device can also set various types of preferences as to what software updates should be received, when they should be received, etc. This enables the owner of the computing device to have significant control of their computing devices such that no undesired updates occur, and such that the desired updates occur at the proper time.

According to one embodiment, the updates are distributed to the computing devices in the plurality of computing devices using one or more of: online delivery of the updates through a computer network, and physical distribution using a computer readable medium. Some computing devices may be connected, either constantly or intermittently, to the server from which the software updates are distributed. Other computers may be true stand-alone computers that never, or very rarely, have an online connection to the server that hosts the software updates. Nevertheless, all these computers are associated with a device type and need to be updated accordingly. Therefore, there needs to be various types of mechanisms available to distribute the updates. Sometimes, the updates are delivered online through a computer network, such as the internet. Other times the updates are delivered on a computer-readable medium, such as a USB stick, or some other type of physical memory, for example, via mail or via courier, and then installed on the computing device. The various embodiments of the invention allow for a wide range of software update delivery mechanisms, which increases flexibility and allows each computing device owner to choose a delivery and installation mechanism that is appropriate based on their specific circumstances.

According to one embodiment, the approved software updates pertain to security software updates for the computing devices. Typically, one of the more important types of updates pertain to security software updates of various kinds. These types of updates often vary depending on the type of computing device. For at least this reason, it is particularly useful to be able to distribute security software patches on a device type basis.

According to one embodiment the approved software updates are distributed to the computing devices in an encrypted format. This further enhances the security of the distribution of the software, and thus the reliability of the software updates for the client device owners. Either the distribution of the software or the software itself, or both, can be done in an encrypted format and then decrypted when the software update is received at the client device. Many mechanisms for such encrypted distribution exist that are familiar to those having ordinary skill in the art.

According to one embodiment, the distribution settings specify a minimal desired update for each computing device among the two or more computing devices. For example, while some computing devices might be updated with any approved available update, others can have distribution settings defining a minimal desired update, such that the computing devices are only updated with new updates that are deemed to be "essential," based on some specific criteria. Installing essential updates only on computing devices may avoid unnecessary downtime for the computing devices, while ensuring that the computing devices are still up to date and working as expected, which can be very important, especially in a production setting. What is considered desired or essential depends on the specifical situation such as production environment, food or beverage product type, etc.

According to a second aspect, the invention relates to a system for updating a plurality of independent computing devices distributed across a plurality of production plants. The system includes a plurality of computing devices distributed in multiple geographical locations, a central server, a memory and a processor. The memory contains instructions that when executed by the processor causes the processor to perform a method that includes:
- registering the independent computing devices with the central server;
- associating a device type with two or more of the registered computing devices;
- determining, for the device type, an approved software update to be distributed to the two or more computing devices associated with the device type; and
- asynchronously distributing the approved software update to the two or more computing devices associated with the device type, in accordance with distribution settings for the two or more computing devices.

The system advantages correspond to those of the method and may be varied similarly.

According to a third aspect, the invention relates to a computer program product for updating a plurality of independent computing devices distributed across a plurality of production plants. The computer program comprises a computer readable storage medium with instructions to carry out the following steps when executed by a processor:
- registering the independent computing devices with a central server;
- associating a device type with two or more of the registered computing devices;
- determining, for the device type, an approved software update to be distributed to the two or more computing devices associated with the device type; and
- asynchronously distributing the approved software update to the two or more computing devices associated with the device type, in accordance with distribution settings for the two or more computing devices.

The computer program involves advantages corresponding to those of the method and may be varied similarly.

The details of one or more embodiments of the invention are set forth in the accompanying drawings and the description below. Other features and advantages of the invention will be apparent from the description and drawings, and from the claims.

### BRIEF DESCRIPTION OF THE DRAWINGS

FIG. 1 shows a schematic diagram of an industrial management update system, in accordance with one embodiment.
FIG. 2 shows flowchart of a process for updating software in a client device, in accordance with one embodiment.

Like reference symbols in the various drawings indicate like elements.

### DETAILED DESCRIPTION

As was described above, one goal with the various embodiments of the invention is to provide techniques for updating a plurality of independent computing devices distributed across a plurality of production plants in multiple geographical locations. This is accomplished with an Industrial Update Management System (IUMS) that includes a central IUMS server (hereinafter referred to as "server"), several IUMS clients (hereinafter referred to as "client"), and an IUMS administration tool (hereinafter referred to as "admin tool"). Briefly, the server exposes an endpoint where clients can ask the server whether specific updates/patches have been tested and validated by a product administrator, and where to find validated installers and a list of command line arguments needed for installing an update/patch. The client is an application that runs on computing devices as a service (e.g., a Windows service) and is responsible for scanning for available updates, check with the server whether the update is approved for installation by the product administrator, download the approved updates and, depending on client configuration, install the updates. The admin tool is used to configure the client settings, such as scheduling and what type of software and patches that should be installed on the clients. These different components and their interactions will now be described in further detail by way of example and with reference to the drawings.

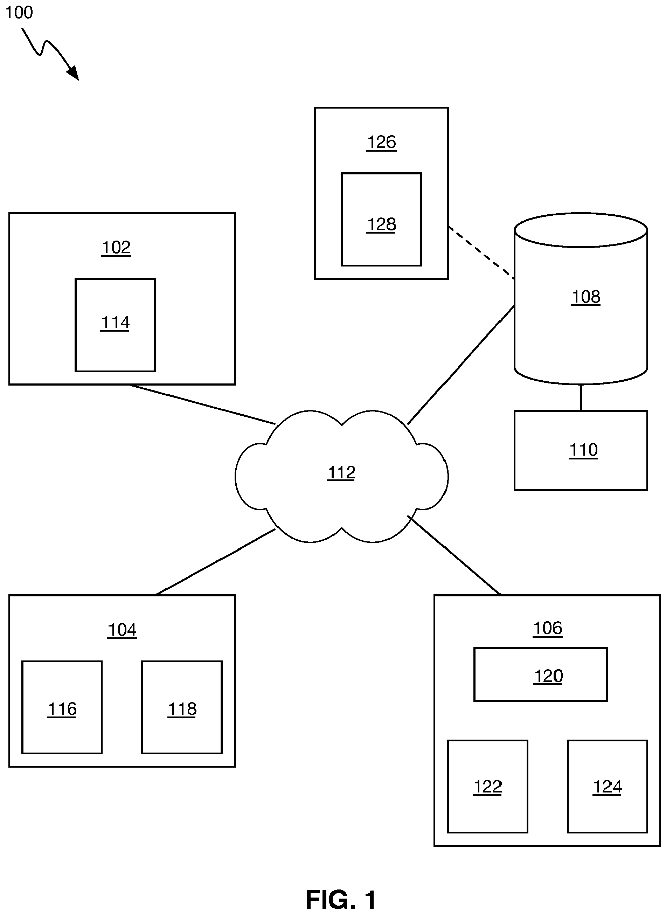

FIG. 1 shows an industrial management update system (IUMS) 100, in accordance with one embodiment. It should be note that for ease of illustration and clarity of the description of IUMS 100, only a few plants and computing devices are shown in FIG. 1, and that in a real life scenario, there would be a much larger number of plants and computing devices. The IUMS 100 includes three plants: Plant A 102, Plant B 104, and Plant C 106, which communicate with a server 108 over a computer network 112, and a fourth Plant D 126, which does not communicate with the server 108 over the computer network 112. Typically, the plants 102, 104, 106 and 126 are used to produce and/or package food and beverage items, but it should be noted that the invention is not limited to food and beverage production/packaging and can be applied in a wide range of industrial (and non-industrial) environments.

As can be seen in FIG. 1, Plant A 102 includes a single client 114, Plant B includes two clients 116 and 118, and Plant C includes two clients 122 and 124 and a Plant Gateway (PG) 120. The PG 120 acts as a gateway for the client devices 122 and 124 in Plant C 106, such that all communication for the clients 122 and 124 with the server 108 occurs via the PG 120. As mentioned above, an admin tool 110 is used by the provider of the software updates to configure various settings for the server 108. Plant D 126 has a client 128 that is "connected" to the server 108 in the sense that the client 128 has been registered with the server 108. While the client 128 may not have an online connection to the server 108 through the network 112, the client 128 will nevertheless require the same updates as at least some of the other clients in other plants of the IUMS 100.

As the plants 102, 104, 106, 126 may be run by different - and possibly competing - manufacturers, the client devices are typically independent from one another. Therefore, the client devices are not members of a common domain, which is typically the case in conventional software distribution environments. In contrast, in accordance with the various embodiments of the invention, the clients instead register with the server 108 where they are associated with a particular device type. For example, in IUMS 100, clients 114, 116, and 124 may belong to one device type, whereas clients 118 and 128 may belong to a different device type and client 122 may belong to yet another device type, regardless of what plant the devices are located in. Typically, a device type is associated with a particular product, although it should be noted that this is not a requirement device types can be associated in any manner that is appropriate for the particular needs of the client owners and the software providers.

As was mentioned above, there can be a wide range of clients. For example, there may be clients that are used to control individual machines that are used in production/packaging, there may be clients that are used to control an entire production line, there may be clients that are various industrial production computers or virtual machines, and so on. The clients may run different operating systems, such as Windows, Linux or MacOS operating systems, just to mention a few examples. The general principles of the embodiments described herein are applicable to essentially any type of clients and operating systems, regardless of their particular function in the production/packaging process.

As was described above, in addition to device types, the IUMS 100 may also include sub-device types. A sub-device type is defined on a hierarchically lower level to a device type. That is, a client must be associated a device type before the client can be associated with a sub-device type. Sub-device types can be used to achieve more fine grained software distribution. Using the above example, there may be a situation where the owners of clients 114, 116 and 124, which all belong to the same device type, have different opinions about what software should be distributed to their respective clients. For example, the owner of client 114 may not be interested in certain updates, which the owners of clients 116 and 124 are interested in. In such a situation, it may be beneficial to create two sub-device types, one for client 114 and a different one for clients 116 and 124, and deploy different updates to the different sub-device types.

The network 112 can be any type of wired and/or wireless network, and typically includes the Internet and one or more intranets. As noted above, any communication on the network 112 with respect to software updates typically occurs in an encrypted manner. The exact encryption manner is not relevant for the particular invention at hand, and can be selected from a wide range of conventional encryption methods by a person having ordinary skill in the art, based on the specific circumstances at hand. Some clients, such as client 128 in Plant D 126, may not use the network 112, but may instead receive its software updates through physical media, such as a USB stick or on a laptop, via mail, courier, personal delivery, etc. as was described above. Nevertheless, the client 128 is still considered to be "connected" by virtue of being registered with the server 108.

The server 108 contains a database of all the clients that have registered with the server 108. The database specifies, for example, a name and a device type associated with the client, the operating system of the client, various settings relating to the updates that the client wishes to receive, and details on how the client can be contacted. The server also contains the updates that have been approved for various device types and/or sub-device types by an administrator. These updates are reviewed and approved and added to the server using the admin tool 110. Typically the administrator adding the updates can classify them as "necessary," "optional," etc., which may aid the clients in determining what updates to retrieve from the server 108. In the event where an PG 120 is used, the PG 120 can act as a gateway to the server 108, and download all updates that its associated clients 122, 124 may need, and then further decisions can be made by the PG 120 about which clients 122 and 124 should receive what updates. This reduces the traffic over the network 112, since only one download needs to be made to Plant C 106, rather than one download for each client 122 and 124 in Plant C.

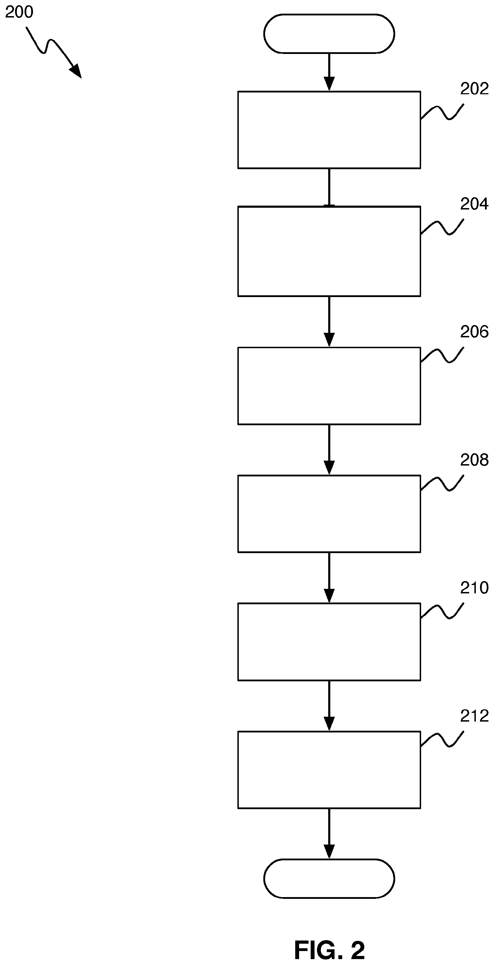

The functionality of IUMS 100 will now be described with respect to how a single client 114 communicates with the server 108 to update its software. It should be noted that in a real life scenario, there are many clients simultaneously performing these operations, but for clarity purposes, only a single client 114 will be referred to in this example. As can be seen in FIG. 2, a process for updating client software in accordance with one embodiment starts by registering the client 114 by the server 108 and associating a device type with the client 114, step 202. The registration details include name and a device type associated with the client, the operating system of the client, various settings relating to the updates that the client wishes to receive, and details on how the client can be contacted, as described above. Some of these details are provided by the client 108 user, whereas others can be detected automatically by the server 108. For example, when a PG 120 is used, most or all of these details can be detected automatically. Typically, the user of the client 114 needs to be authenticated by the server, to prevent random and unauthorized users from registering clients 114 with the server 108.

Once the client 114 is registered, the administrator of the server 108, may upload approved software updates for the device type of the client 114 to the server 108, step 204. As was described above, the updates are typically tested first and then uploaded using the admin tool 110.

Next, the client 114 asks the server 108 whether there are any available updates, step 206. The frequency with which the client 114 asks the server 108 may depend on the particular circumstances. For example, some clients may ask automatically at preconfigured time intervals, e.g., during known windows of time when the plant is being serviced. Other clients may ask only when a client user initiates a check for an update. An PG 120 that is not critical for production purposes may ask the server 108 very frequently such that the PG 120 is always updated with the latest software for further distribution to any of its clients. Thus, many variations can be envisioned and configured by those having ordinary skill in the art. The mechanisms for asking the server 108 is typically implemented by the client 114 using some type of manifest in the form of a structured text document. There are many types of structured text documents that are familiar to those having ordinary skill in the art, such as an Extended Markup Language (XML), JavaScript Object Notation (JSON), or YAML Ain't Markup Language (YAML), just to mention a few examples.

Next the server 108 responds with a list of available updates, based on the device type and/or sub-device type, and any other optional settings specified, for the client 114, step 208. Typically, the XML document that the client 114 receives from the server 108 also contains information about how/where to retrieve the software updates.

Next, the client 114 makes a decision about which updates to download based on its settings, and downloads those updates 210. For example, the client 114 may only desire to download "essential" updates rather than all available updates. Or the client may already have 9 out of 10 available updates installed. In such a situation, the client will only retrieve the one missing update. Typically these updates are retrieved in an encrypted format, as described above.

Finally, the client 114 installs the updates during an appropriate time window, and reports the result of the installation to the server 108, which ends the process. Depending on the particular configuration, multiple various file formats can be used, such as .MSI files, .EXE files, .MSU files, just to mention a few alternatives. Furthermore, the installation does not necessarily need to use a graphical user interface. In some implementations a command line interface can be used, such that the user of the client 114 does not need to provide any input during the installation.

It should be noted that there are many variations to the above examples which fall within the scope of the appended claims. For example, while sub-device types have been discussed above as having a hierarchical relationship to device types that only extends one level down, there is nothing that prevents multiple levels of hierarchical relationships to exist, which may provide even further granularity in terms of organizing what software updates get distributed to what computing devices. Further, these sub-device types have been described above as existing on a "provider" level (i.e. at the server from which the software updates are distributed), they could alternatively be configured at the client site, in order to more efficiently distribute software updates to clients within a particular packaging or processing plant. Thus, many variations can be envisioned by those having ordinary skill in the art.

It should further be noted that while the description focuses on automated distribution of software updates, there are no technical limitations that prevent administrators of individual clients from adding other software on their own to the clients. However, there may possibly be legal and/or business consequences of doing so without the software provider's approval, depending on the particular circumstances at hand.

Further, some implementations may include optional reporting functionality, such that an administrator of the server 108 can view what updates where updated to which clients, or view reports on an aggregate level, e.g., "96 % of devices of device type A have received version 1.1.3 of the software," or on a customer level, e.g., "Customer A has only installed 10% of the most recent updates," etc., or visualize this information using various graphic tools.

The systems and methods disclosed herein can be implemented as software, firmware, hardware or a combination thereof. In a hardware implementation, the division of tasks between functional units or components referred to in the above description does not necessarily correspond to the division into physical units; on the contrary, one physical component can perform multiple functionalities, and one task may be carried out by several physical components in collaboration.

Certain components or all components may be implemented as software executed by a digital signal processor or microprocessor, or be implemented as hardware or as an application-specific integrated circuit. Such software may be distributed on computer readable media, which may comprise computer storage media (or non-transitory media) and communication media (or transitory media). As is well known to a person skilled in the art, the term computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by a computer.

The flowchart and block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be appreciated that a person skilled in the art can modify the above-described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A method for updating a plurality of independent computing devices (114, 116, 118, 122, 124, 128) distributed in multiple geographical locations, comprising:
registering the independent computing devices (114, 116, 118, 122, 124, 128) with a central server (108);
associating a device type with two or more of the registered computing devices (114, 116, 118, 122, 124, 128);
determining, for the device type, an approved software update to be distributed to the two or more computing devices (114, 116, 118, 122, 124, 128) associated with the device type; and
asynchronously distributing the approved software update to the two or more computing devices (114, 116, 118, 122, 124, 128) associated with the device type, in accordance with distribution settings for the two or more computing devices (114, 116, 118, 122, 124, 128).

2. The method of claim 1, further comprising:
associating a sub-device type with a computing device among the registered computing devices (114, 116, 118, 122, 124, 128), wherein the sub-device type has a strictly hierarchical relationship with the device type; and
distributing the one or more approved updates to the computing device in accordance with its sub-device type.

3. The method of claim 2, further comprising:
scheduling the distributed software update to be installed during a window of time when individual plants are closed for maintenance.

4. The method of claim 3, wherein the computing devices (114, 116, 118, 122, 124, 128) include one or more of: industrial personal computers, virtual machines, production line controllers, and a computing device integrated into a machine forming a part of the production line.

5. The method of any of the preceding claims, wherein the updates are reviewed and approved by an administrator prior to distributing the updates to the respective computing devices.

6. The method of any of the preceding claims, wherein registering further comprises:
configuring distribution settings for the computing device.

7. The method of any of the preceding claims, wherein the updates are distributed to the computing devices (114, 116, 118, 122, 124, 128) in the plurality of computing devices using one or more of: online delivery of the updates through a computer network (112), and physical distribution using a computer readable medium.

8. The method of any of the preceding claims, wherein the approved software updates pertain to security software updates for the computing devices (114, 116, 118, 122, 124, 128).

9. The method of any of the preceding claims, wherein the approved software updates are distributed to the computing devices (114, 116, 118, 122, 124, 128) in an encrypted format.

10. The method of any of the preceding claims, wherein the distribution settings specify a minimal desired update for each computing device among the two or more computing devices (114, 116, 118, 122, 124, 128).

11. A system for updating a plurality of computing devices (114, 116, 118, 122, 124, 128) distributed in multiple geographical locations, comprising:
a plurality of computing devices (114, 116, 118, 122, 124, 128) distributed in multiple geographical locations;
a central server (108);
a memory; and
a processor,
wherein the memory contains instructions that when executed by the processor causes the processor to perform a method that includes:
registering the independent computing devices (114, 116, 118, 122, 124, 128) with the central server (108);
associating a device type with two or more of the registered computing devices (114, 116, 118, 122, 124, 128);
determining, for the device type, an approved software update to be distributed to the two or more computing devices (114, 116, 118, 122, 124, 128) associated with the device type; and
asynchronously distributing the approved software update to the two or more computing devices (114, 116, 118, 122, 124, 128) associated with the device type, in accordance with distribution settings for the two or more computing devices (114, 116, 118, 122, 124, 128).

12. A computer program product comprising a computer readable storage medium with instructions adapted to carry out the method according to any of claims 1-10 when executed by a processor.
